# EUROPÄISCHE PATENTSCHRIFT

(11) **EP 2 131 081 B1**
(45) Veröffentlichungstag und Bekanntmachung des Hinweises auf die Patenterteilung: **06.05.2015**
(21) Anmeldenummer: 09007127.5
(22) Anmeldetag: 28.05.2009
(51) Int. Cl.: F16K 5/16, F16K 11/083

(54) **Mehrwegeventil**
Multiway valve
Soupape à plusieurs voies

(30) Priorität: 05.06.2008 DE 202008007525 U
(43) Veröffentlichungstag der Anmeldung: 09.12.2009
(73) Patentinhaber: Robert Bosch GmbH, 70442 Stuttgart (DE)
(72) Erfinder: Kanis, Mark, 8181 TS Heerde (NL)

(56) Entgegenhaltungen:
- EP-A1- 1 363 012
- DE-B- 1 088 873

## Beschreibung

Die Erfindung betrifft ein Mehrwegeventil nach dem Oberbegriff des Schutzanspruches 1.

Gattungsgemäße Mehrwegeventile sind als Zweiwege-, Dreiwege- oder Vierwegeventile hinlänglich aus dem Stand der Technik bekannt. Sie führen zwei, drei oder vier fluidführende Leitungen an eigens hierfür vorgesehenen Anschlussvorrichtungen zusammen und dienen der Kontrolle des hindurchtretenden Fluidstromes. Die Art der Kontrolle umfasst das Öffnen (Freigeben), Schließen (Versperren) und/oder Drosseln eines Fluidstromes oder mehrerer Teilfluidströme.

Ein Dreiwegeventil verbindet drei fluidführende Leitungen. In der Anlagentechnik werden zwei Einbauvarianten unterschieden: Der Einbau als Sammler fasst zwei ankommende Leitungen zu einer abgehenden Leitung zusammen, während der Einbau als Verteiler eine ankommende und zwei abgehende Leitungen umfasst. Beim Einbau als Sammler kann es sich beispielsweise um ein Dreiwegeumschaltventil handeln, das zwischen den beiden ankommenden Fluidströmen hin- und herschalten kann, also jeweils einen Fluidstrom freigibt und den anderen sperrt. Der jeweils freigegebene Fluidstrom wird in die abgehende Leitung gelenkt. Sind auch Zwischenstellungen zwischen den beiden Endstellungen zugelassen, so erfüllt das Dreiwegeventil die Funktion eines Dreiwegemischventils, zwei Teilfluidströme aus den beiden ankommenden Leitungen werden zu einem gemischten Fluidstrom in die abgehende Leitung gelenkt. Bei umgekehrter Durchströmungsrichtung wird das Dreiwegeventil als Verteilventil eingesetzt mit den Optionen, einen ankommenden Fluidstrom als zwei Teilfluidströme auf zwei abgehende Leitungen aufzuteilen bzw. zwischen zwei abgehenden Leitungen hin- und herzuschalten.

Verschiedene konstruktive Ausführungen sind bekannt. Sie umfassen in der Regel ein Ventilgehäuse mit mindestens zwei Anschlussvorrichtungen (z.B. Gewindeanschluss) zum Anschließen fluidführender Leitungen, über die ein Fluid einströmt und/oder ausströmt, sowie einen einem Ventilsitz (z.B. Aufnahmebohrung) im Ventilgehäuse zugeordneten verstellbaren Absperrkörper zum Freigeben und/oder Versperren mindestens eines Fluidstromes oder Teilfluidstromes zwischen den Anschlussvorrichtungen.

Der Absperrkörper vollführt bei Betätigung eine Stellbewegung, die linear oder rotierend sein kann. Absperrkörper mit linearer Stellbewegung sind Scheiben, Membranen und Ventilnadeln, während Kugeln, Zylinder und Konen eine rotierende Stellbewegung vollführen. Letztere Absperrkörper sind in der Regel mit einer zentrischen oder seitlichen Aussparung bzw. Profilierung versehen, mit deren Hilfe ein Fluidstrom freigegeben, gedrosselt oder versperrt werden kann.

So zeigt die DE 10 88 873 B ein Mehrwegeventil, bei welchem die Aufnahmebohrung konisch geformt ist, der Absperrkörper die Form einer runden und/oder ovalen Scheibe aufweist und der Absperrkörper in der Aufnahmebohrung mittels Drehung verstellbar ist.

Die EP 1363 012 A1 offenbart ein Schaltventil mit mindestens einem Ventileinlass und mindestens einem Ventilauslass, wobei ein im Ventilgehäuse geführt gehaltenes Tellerventil als Ventilsteller vorgesehen ist. Das Tellerventil besteht aus einem Ventilschaft und einem Ventilteller, wobei zwischen der Flächennormalen des Ventiltellers und der Erstreckungsrichtung des Ventilschafts ein Winkel gegeben ist.

Bei Ventilen mit linear bewegten Absperrkörpern berührt der Absperrkörper den Ventilsitz nur in der Schließstellung und ist sonst von diesem abgehoben, die Festkörperreibung im Ventilsitz ist demnach vernachlässigbar. Rotierende Absperrkörper stehen immer in direktem Kontakt zum Ventilsitz, weshalb die Festkörperreibung bei der Auslegung berücksichtigt werden muss und je nach Materialpaarung zu mehr oder weniger Verschleiß führt. Dafür ist die mechanische Auslegung des rotierenden Absperrkörpers im Ventilgehäuse (kurzer Schaft, geringste lineare Bewegung) der Führung des linear verstellbaren Absperrkörpers deutlich überlegen.

Der Erfindung liegt die Aufgabe zugrunde, ein kostengünstig herstellbares Mehrwegeventil zu schaffen, das die Reibungsarmut der linearen Stellbewegung mit den mechanischen Vorteilen der rotierenden Stellbewegung verbindet.

Erfindungsgemäß wird dies durch die Gegenstände mit den Merkmalen des Schutzanspruches 1 gelöst. Vorteilhafte Weiterbildungen sind den Unteransprüchen zu entnehmen.

Das erfindungsgemäße Mehrwegeventil weist ein Ventilgehäuse mit mindestens zwei Anschlussvorrichtungen zum Einströmen und/oder Ausströmen eines Fluides und ein in einer Aufnahmebohrung im Ventilgehäuse angeordneten verstellbaren Absperrkörper zum Freigeben und/oder Versperren mindestens eines Fluidstromes oder Teilfluidstromes zwischen den Anschlussvorrichtungen auf, wobei die Aufnahmebohrung im Wesentlichen konisch geformt ist, der Absperrkörper im Wesentlichen die Form einer runden und/oder ovalen Scheibe aufweist, die in einer schräg zur Längsachse der Aufnahmebohrung stehenden Ebene angeordnet ist, und wobei der Absperrkörper in der Aufnahmebohrung im Wesentlichen mittels Drehung verstellbar ist. Die Geometrie der im Wesentlichen runden bzw. ovalen Scheibe entsteht gedanklich durch eine schräg aus einem geraden Kreiskegel herausgeschnittene Schicht. Der "schräge" Winkel a zwischen der Scheibe und der Symmetrieachse der Aufnahmebohrung liegt im Bereich 20° ≤ α ≤ 70° und beträgt vorzugsweise etwa a = 45°. Durch seine Schrägstellung gibt der scheibenförmige Absperrkörper den Fluiddurchtritt durch zwei Anschlussvorrichtungen des Ventils frei und sperrt die restlichen Anschlussvorrichtungen. Das Mehrwegeventil ist dadurch gekennzeichnet, dass es weiter einen Aktor (beispielsweise ein Elektromotor mit Getriebeübersetzung) mit einem verstellbaren Ventilschaft, auf dem der Absperrkörper angeordnet ist, zur Verstellung des Absperrkörpers aufweist. Der Ventilschaft ist sowohl translatorisch in seiner Längsrichtung als auch rotatorisch um seine Längsachse beweglich. Eine Betätigung des Aktors hat eine Verstellung des Absperrkörpers mit den Schritten (translatorisches) Abheben des Absperrkörpers von der Wandung der Aufnahmebohrung, (rotatorisches) Verdrehen des Absperrkörpers und (translatorisches) Aufsetzen des Absperrkörpers auf die Wandung der Aufnahmebohrung zur Folge. Damit wird erreicht, dass der Absperrkörper während seiner Verdrehung nicht in der Aufnahmebohrung bzw. auf dem Ventilsitz aufsitzt, und ein möglicher Verschleiß aufgrund von Festkörperreibung zwischen Absperrkörper und Aufnahmebohrung minimiert wird. In den Ruhestellungen dagegen sitzt der Absperrkörper an der Wandung auf und ist somit gut geführt und vor unerwünschten Schwingungen geschützt.

Der Absperrkörper ist zwischen zwei Endstellungen verstellbar und hat zwischen diesen Endstellungen einen Verstellweg, der mindestens zwei Ruhestellungen aufweist. In den Ruhestellungen kommt der Absperrkörper zum Stillstand (keine Stellbewegung, stationäre Durchströmung). Wird ein Dreiwegeventil als reines Umschaltventil genutzt, so gibt es nur zwei Ruhestellungen des Absperrkörpers, die mit seinen Endstellungen identisch sind. Bei Verwendung als Mischventil dagegen sind zwischen den beiden Endstellungen stufig oder stufenlos einstellbar weitere Ruhestellungen möglich.

In den mindestens zwei Ruhestellungen liegt der Absperrkörper dicht an der konischen Wandung der Aufnahmebohrung auf oder an. Für seine Verstellung aus einer Ruhestellung in eine andere ist der Absperrkörper von der Wandung der Aufnahmebohrung abhebbar.

Ein Mechanismus zur Realisierung der abhebenden Bewegung des Absperrkörpers von der Wandung der Aufnahmebohrung bei Betätigung des Aktors beruht auf einer gekoppelten Bewegung von Führungsstift und Führungsnut. Dabei setzen ein im Ventilschaft quer-liegender Führungsstift und eine geschwungene Führungsnut im Ventilgehäuse (oder in einem mit dem Ventilgehäuse fest verbundenen Bauteil) eine vom Aktor aufgeprägte Drehung zunächst in eine im Wesentlichen axiale Hubbewegung um. Durch den Hub wird der Absperrkörper in der Aufnahmebohrung angehoben. Sodann folgt eine Drehung des Absperrkörpers um ein gewünschtes Winkelmaß und endlich sein im Wesentlichen axiales Absetzen in die neue Ruhestellung.

Ein anderer Mechanismus nutzt eine elektrische Kopplung zwischen der Betätigung des Aktors und einem damit einhergehenden Anziehen eines Elektromagneten, wodurch der Absperrkörper von der Wandung der Aufnahmebohrung abhebt. Bei abgehobenem Absperrkörper folgt dessen Drehbewegung in die neue Stellung und sodann sein Absenken oder Aufsetzen in der Aufnahmebohrung durch Lösen der elektromagnetischen Kraft.

In einer Ausführung umfasst der Absperrkörper einen innenliegenden formstabilen Kern und einen außenliegenden elastischen Überzug, der sich, vom Kern gestützt, an die Wandung der Aufnahmebohrung dichtend anlegt (anschmiegt).

In einer anderen Ausführungsform weist der Absperrkörper die Form eines schräg abgeschnittenen Kegelstumpfes auf. Die größere Grundfläche des Kegelstumpfes steht dabei im Wesentlichen rechtwinklig auf der Symmetrieachse der Aufnahmebohrung, während die kleinere Deckfläche schräg in einem Winkel a im Bereich 20° ≤ α s 70° zur Symmetrieachse der Aufnahmebohrung steht.

Die Zeichnungen stellen mehrere schematische Ausführungsbeispiele der Neuerung dar und zeigen in den Figuren:
Fig. 1 Mehrwegeventil mit drei Fluidanschlussvorrichtungen, konischer Aufnahmebohrung, Ventilschaft und Absperrkörper in zwei Stellungen (a) und (b).
Fig. 2 Mehrwegeventil nach Figur 1 mit Kopplungsmechanismus mit Führungsstift und Führungsnut.
Fig. 3 Absperrkörper in zwei optionalen Ausführungen (a) und (b).

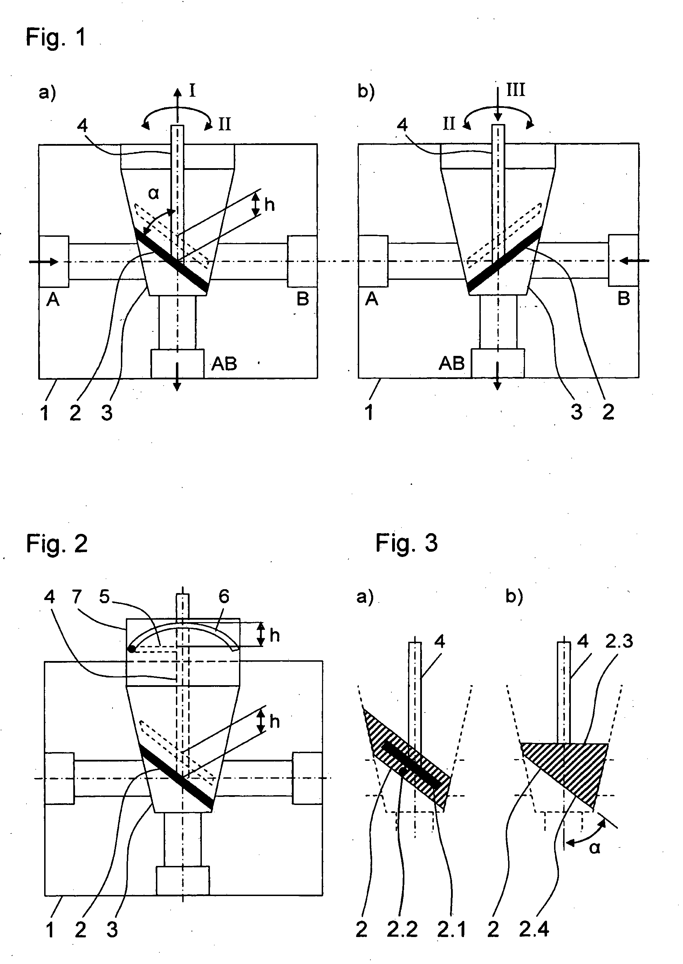

Fig. 1 zeigt ein neuerungsgemäßes Dreiwegeventil, das, als Sammler eingebaut, zwei an-kommende Leitungen (Anschlussvorrichtungen A und B) zu einer abgehenden Leitung (Anschlussvorrichtung AB) zusammenfasst. In Figur 1a strömt ein Fluid über die Anschlussvorrichtung A in das Ventilgehäuse 1 ein. Der Absperrkörper 2 gibt den Weg für eine Strömung von A nach AB frei und versperrt den Weg für eine Fluidströmung aus Richtung B. Der Absperrkörper 2 ist in der Aufnahmebohrung 3 angeordnet und auf dem Ventilschaft 4 fixiert. Zur Verstellung des Absperrkörpers 2 hebt dieser, vom Ventilschaft 4 bewegt und geführt, von der konischen Wandung der Aufnahmebohrung 3 ab (Bewegung I, Hub h), dreht in die gewünschte Position (Bewegung II) und senkt sich wieder in die neue Ruhestellung auf die Wandung der Aufnahmebohrung 3 ab (Bewegung III in Figur 1b). In Figur 1b strömt nun nach Umschaltung des Dreiwegeventils ein Fluid von B kommend in das Ventilgehäuse 1 ein. Der Absperrkörper 2 gibt den Weg für eine Strömung von B nach AB frei und versperrt den Weg für eine Fluidströmung aus Richtung A.

Fig. 2 zeigt einen Mechanismus zur Kopplung von translatorischer und rotatorischer Bewegung. Dazu wird eine Führungsstift-Führungsnut-Kopplung verwendet. Der Führungsstift 5 ist fest mit dem Ventilschaft 4 verbunden und ragt rechtwinklig aus diesem hervor in eine Führungsnut 6 hinein. Die Führungsnut 6 ist im Ventilgehäuse 1 (bzw. in einem fest mit dem Ventilgehäuse 1 verbundenen Bauteil 7) angeordnet und weist einen geschwungenen Verlauf mit Komponenten in Achs- und in Umfangsrichtung auf. Bei Drehung des Ventilschaftes 4 bewegt sich der Führungsstift 5 in der Führungsnut 6. Eine anfängliche Teilbewegung des Ventilschaftes 4 wird in ein Abheben (vergl. Bewegung I aus Figur 1), eine sich kontinuierlich anschließende Teilbewegung in ein Drehen (vergl. Bewegung II), und eine abschließende Teilbewegung in ein Aufsetzen (vergl. Bewegung III) des Absperrkörpers 2 umgesetzt.

Fig. 3 zeigt zwei weitere Absperrkörper-Varianten 2. In Figur 3a ist ein Absperrkörper 2 mit einem innenliegenden formstabilen Kern 2.1 (schwarz) und einem außenliegenden elastisch verformbaren Überzug 2.2 (schraffiert) dargestellt. Die Elastizität des Überzugs 2.2 verbessert die Dichtwirkung des Absperrkörpers 2 bei Anliegen an der Wandung der Aufnahmebohrung 3. Figur 3b zeigt einen Absperrkörper 2, der die Form eines schräg abgeschnittenen Kegelstumpfes aufweist. Die größere Grundfläche 2.3 steht im Wesentlichen rechtwinklig auf der Symmetrieachse der Aufnahmebohrung 3. Die kleinere Deckfläche 2.4 weist einen Winkel a im Bereich 20° ≤ α ≤ 70° zur Symmetrieachse der Aufnahmebohrung 3 auf. Mit einem solchen Absperrkörper 2 wird die gesperrte Anschlussvorrichtung gänzlich abgedeckt.

## Patentansprüche

1. Mehrwegeventil mit einem Ventilgehäuse (1) mit mindestens zwei Anschlussvorrichtungen zum Einströmen und/oder Ausströmen eines Fluides und einem in einer Aufnahmebohrung (3) im Ventilgehäuse (1) angeordneten verstellbaren Absperrkörper (2) zum Freigeben und/oder Versperren mindestens eines Fluidstromes oder Teilfluidstromes zwischen den Anschlussvorrichtungen,
• die Aufnahmebohrung (3) im Wesentlichen konisch geformt ist,
• der Absperrkörper (2) im Wesentlichen die Form einer runden und/oder ovalen Scheibe aufweist und in einer in einem Winkel a im Bereich 20° ≤ α ≤ 70° zur Symmetrieachse der Aufnahmebohrung stehenden Ebene angeordnet ist, und
• der Absperrkörper (2) in der Aufnahmebohrung (3) im Wesentlichen mittels Drehung verstellbar ist,
**dadurch gekennzeichnet, dass** das Mehrwegeventil weiter einen Aktor mit einem verstellbaren Ventilschaft (4), auf dem der Absperrkörper (2) angeordnet ist, zur Verstellung des Absperrkörpers (2) aufweist wobei der Aktor so ausgestaltet ist, dass die Verstellung des Absperrkörpers (2) die Schritte Abheben des Absperrkörpers (2) von der Wandung der Aufnahmebohrung (3), Verdrehen des Absperrkörpers (2) und Aufsetzen des Absperrkörpers (2) auf die Wandung der Aufnahmebohrung (3) umfasst.

2. Mehrwegeventil nach Anspruch 1, **dadurch gekennzeichnet, dass** der Absperrkörper (2) zwischen zwei Endstellungen verstellbar ist und einen Verstellweg hat, der mindestens zwei Ruhestellungen, in denen der Absperrkörper (2) zum Stillstand kommt, aufweist.

3. Mehrwegeventil nach Anspruch 1 oder 2, **dadurch gekennzeichnet, dass** der Absperrkörper (2) in den mindestens zwei Ruhestellungen dicht an einer Wandung der Aufnahmebohrung (3) aufliegt oder anliegt, und für seine Verstellung von der Wandung der Aufnahmebohrung (3) abhebbar ist.

4. Mehrwegeventil nach einem der Ansprüche 1 bis 3, **dadurch gekennzeichnet, dass** der Absperrkörper (2) bei einer Betätigung des Aktors mittels einer gekoppelten Bewegung eines im Ventilschaft (4) angeordneten Führungsstiftes (5) in einer Führungsnut (6) im Ventilgehäuse (1) oder in einem mit dem Ventilgehäuse (1) fest verbundenen Bauteil (7) von der Wandung der Aufnahmebohrung (3) abhebt.

5. Mehrwegeventil nach einem der Ansprüche 1 bis 4, **dadurch gekennzeichnet, dass** der Absperrkörper (2) bei einer Betätigung des Aktors mittels eines Magneten von der Wandung der Aufnahmebohrung (3) abhebt.

6. Mehrwegeventil nach einem der Ansprüche 1 bis 5, **dadurch gekennzeichnet, dass** der Absperrkörper (2) einen innenliegenden formstabilen Kern (2.1) und einen außenliegenden elastischen Überzug (2.2) umfasst.

7. Mehrwegeventil nach einem der Ansprüche 1 bis 6, **dadurch gekennzeichnet, dass** der Absperrkörper (2) die Form eines schräg abgeschnittenen Kegelstumpfes aufweist, wobei eine Kegelstumpf-Grundftäche (2.3) im Wesentlichen rechtwinklig auf der Symmetrieachse der Aufnahmebohrung (3) steht und eine Kegelstumpf-Deckfläche (2.4) in einem Winkel a im Bereich 20° ≤ α ≤ 70° zur Symmetrieachse der Aufnahmebohrung (3) steht.

## Claims

1. Directional valve having a valve housing (1) with at least two connection device for the inflow and/or outflow of a fluid and with an adjustable shut-off body (2), arranged in a reception bore (3) in the valve housing (1), for releasing and/or shutting off at least one fluid stream or fluid substream between the connection devices,
• the reception bore (3) is shaped essentially conically,
• the shut-off body (2) has essentially the shape of a round and/or oval disc and is arranged in a plane standing at an angle α in the range of 20° ≤ α ≤ 70°to the axis of symmetry of the reception bore, and
• the shut-off body (2) is adjustable in the reception bore (3) essentially by means of rotation,
**characterized in that** the directional valve has, further, an actuator with an adjustable valve stem (4), on which the shut-off body (2) is arranged, for the adjustment of the shut-off body (2), the actuator being configured such that the adjustment of the shut-off body (2) comprises the steps of lifting off the shut-off body (2) from the wall of the reception bore (3), of rotating the shut-off body (2) and of placing the shut-off body (2) onto the wall of the reception bore (3).

2. Directional valve according to Claim 1, **characterized in that** the shut-off body (2) is adjustable between two end positions and has an adjustment travel which has at least two positions of rest in which the shut-off body (2) comes to a standstill.

3. Directional valve according to Claim 1 or 2, **characterized in that** the shut-off body (2), in the at least two positions of rest, lies sealingly on or against a wall of the reception bore (3) and, for its adjustment, can be lifted off from the wall of the reception bore (3).

4. Directional valve according to one of Claims 1 to 3, **characterized in that**, when the actuator is actuated, the shut-off body (2) lifts off from the wall of the reception bore (3) by means of a coupled movement of a guide pin (5), arranged in the valve stem (4), in a guide groove (6) in the valve housing (1) or in a component (7) firmly connected to the valve housing (1).

5. Directional valve according to one of Claims 1 to 4, **characterized in that**, when the actuator is actuated, the shut-off body (2) lifts off from the wall of the reception bore (3) by means of a magnet.

6. Directional valve according to one of Claims 1 to 5, **characterized in that** the shut-off body (2) comprises an internal dimensionally stable core (2.1) and an external elastic covering (2.2).

7. Directional valve according to one of Claims 1 to 6, **characterized in that** the shut-off body (2) has the shape of an obliquely truncated cone frustum, a cone frustum base (2.3) standing essentially at right angles to the axis of symmetry of the reception bore (3), and a cone frustum top (2.4) standing at an angle α in the range 20° ≤ α ≤ 70° to the axis of symmetry of the reception bore (3).

## Revendications

1. Soupape à plusieurs voies comprenant un boîtier de soupape (1) comprenant au moins deux dispositifs de raccordement pour l'entrée et/ou la sortie d'un fluide et un corps de blocage (2) déplaçable disposé dans un alésage de réception (3) dans le boîtier de soupape (1) pour libérer et/ou bloquer au moins un flux de fluide ou un flux de fluide partiel entre les dispositifs de raccordement,
- l'alésage de réception (3) étant formé de manière essentiellement conique,
- le corps de blocage (2) présentant essentiellement la forme d'un disque rond et/ou ovale et étant disposé dans un plan situé à un angle α dans la plage de 20° ≤ α ≤ 70° par rapport à l'axe de symétrie de l'alésage de réception, et
- le corps de blocage (2) étant déplaçable dans l'alésage de réception (3) essentiellement au moyen d'une rotation,
**caractérisée en ce que** la soupape à plusieurs voies comprend en outre un actionneur pourvu d'une tige de soupape déplaçable (4), sur laquelle le corps de blocage (2) est disposé, pour le déplacement du corps de blocage (2), l'actionneur étant configuré de telle sorte que le déplacement du corps de blocage (2) comporte les étapes de soulèvement du corps de blocage (2) de la paroi de l'alésage de réception (3), de rotation du corps de blocage (2) et de placement du corps de blocage (2) sur la paroi de l'alésage de réception (3).

2. Soupape à plusieurs voies selon la revendication 1, **caractérisée en ce que** le corps de blocage (2) est déplaçable entre deux positions finales et a une course de déplacement qui comprend au moins deux positions de repos dans lesquelles le corps de blocage (2) s'immobilise.

3. Soupape à plusieurs voies selon la revendication 1 ou 2, **caractérisée en ce que**, dans les au moins deux positions de repos, le corps de blocage (2) repose ou s'applique de manière étanche contre une paroi de l'alésage de réception (3), et peut être soulevé de la paroi de l'alésage de réception (3) pour son déplacement.

4. Soupape à plusieurs voies selon l'une quelconque des revendications 1 à 3, **caractérisée en ce que** le corps de blocage (2) se soulève de la paroi de l'alésage de réception (3) lors d'un actionnement de l'actionneur au moyen d'un déplacement couplé d'une goupille de guidage (5) disposée dans la tige de soupape (4) dans une rainure de guidage (6) dans le boîtier de soupape (1) ou dans un composant (7) relié fixement au boîtier de soupape (1).

5. Soupape à plusieurs voies selon l'une quelconque des revendications 1 à 4, **caractérisée en ce que** le corps de blocage (2) se soulève de la paroi de l'alésage de réception (3) lors d'un actionnement de l'actionneur au moyen d'un aimant.

6. Soupape à plusieurs voies selon l'une quelconque des revendications 1 à 5, **caractérisée en ce que** le corps de blocage (2) comporte un noyau (2.1) de forme stable situé à l'intérieur et un revêtement (2.2) élastique situé à l'extérieur.

7. Soupape à plusieurs voies selon l'une quelconque des revendications 1 à 6, **caractérisée en ce que** le corps de blocage (2) présente la forme d'un tronc de cône coupé de manière oblique, une surface de base de tronc de cône (2.3) étant essentiellement perpendiculaire à l'axe de symétrie de l'alésage de réception (3) et une surface supérieure de tronc de cône (2.4) étant située à angle α dans la plage de 20° ≤ α ≤ 70° par rapport à l'axe de symétrie de l'alésage de réception (3).
